**Europäisches Patentamt**

**European Patent Office**

**Office européen des brevets**

(11) Publication number: **0 549 650 B1**

# EUROPEAN PATENT SPECIFICATION

(45) Date of publication of patent specification: **25.01.95**  (51) Int. Cl.6: **B01D 17/00**

(21) Application number: **91916609.0**

(22) Date of filing: **11.09.91**

(86) International application number:
**PCT/DK91/00263**

(87) International publication number:
**WO 92/04959 (02.04.92 92/08)**

(54) **ARRANGEMENT FOR PURIFICATION OF WASTE WATER.**

(30) Priority: **14.09.90 DK 2199/90**

(43) Date of publication of application:
**07.07.93 Bulletin 93/27**

(45) Publication of the grant of the patent:
**25.01.95 Bulletin 95/04**

(84) Designated Contracting States:
**CH DE ES GB GR IT LI NL SE**

(56) References cited:
**SE-B- 323 058**
**US-A- 4 855 050**

(73) Proprietor: **Frandsen, Aksel Sondergard**
**Dalmosevej 4,**
**Abyskov**
**DK-5881 Skarup (DK)**

(72) Inventor: **Frandsen, Aksel Sondergard**
**Dalmosevej 4,**
**Abyskov**
**DK-5881 Skarup (DK)**

(74) Representative: **Hansen, Kaj**
**c/o Kaj Hansen ApS,**
**Radgivende ingeniorfirma,**
**Elsegarde Skovvej 5**
**DK-8400 Ebeltoft (DK)**

Rank Xerox (UK) Business Services
(3.10/3.09/3.3.3)

## Description

The present invention relates to an arrangement for purification of waste water.

Clarification/sedimentation systems are known where clarification is obtained by precipitation of suspended sludge. One drawback of such systems is that such clarification takes a long time. Furthermore, substances whose specific gravity is close to that of the water do not precipitate, but will be discharged together with the water through the outlet.

It is the purpose of the present invention to describe an arrangement for the purification of waste water which has none of the drawbacks of the known purification systems.

US-A-4 855 050 discloses a purification arrangement for waste water which comprises a number of lengths of pipe wound, layer upon layer, round a central pipe in the middle.

This is achieved by embodying the purification arrangement as described in the characterizing part of Claim 1.

The result of this is a rapid and efficient removal from the waste water of impurities which are lighter than as well as heavier than water, or of approximately the same specific weight as water. Furthermore, the arrangement according to the invention takes up considerably less space than the known plants.

By the embodiment described in Claim 2 i.e. the pipes being corrugated the arrangement according to the invention takes up as little space as possible.

Claim 3 describes a special mode of operation of the arrangement according to the invention.

Claim 4 describes another mode of operation of the invention according to the invention.

Claim 5 describes an initial embodiment of a purification arrangement according to the invention which is well suited for purification of the water of impurities which are lighter than water, e.g. oil.

Claim 6 describes another embodiment of the arrangement according to the invention, in which the pipe system has water flowing both on the inside and the outside.

Claim 7 describes a preferred area of the surface load in an arrangement according to the invention, when it is used for oil separation.

Claim 8 describes a third embodiment of the arrangement according to the invention, which is particularly well suited for purification of waste water when the impurities have approx. the same or higher specific gravity than that of water.

The invention is explained in detail below with reference to the drawing in which

fig. 1 is a perspective view of a battery for an arrangement according to the invention,

fig. 2 is a schematic cross-section through an initial embodiment of an arrangement according to the invention.

fig. 3 is a schematic view of a cross-section through another embodiment of an arrangement according to the invention, and

fig. 4 is a schematic cross-section through a third embodiment of the invention.

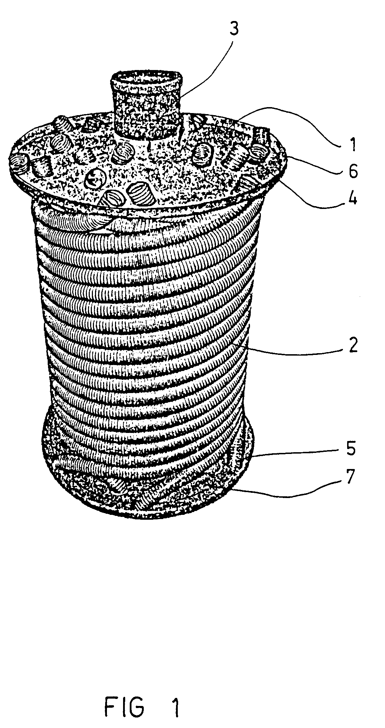

As shown in fig. 1 a battery 1 for an arrangement according to the invention consists of a number of lengths of pipe 2 wound helically, layer upon layer, round a central pipe 3 in the middle.

The pipe ends 4, 5 and the central pipe 3 are connected watertight to end covers 6 and 7, respectively.

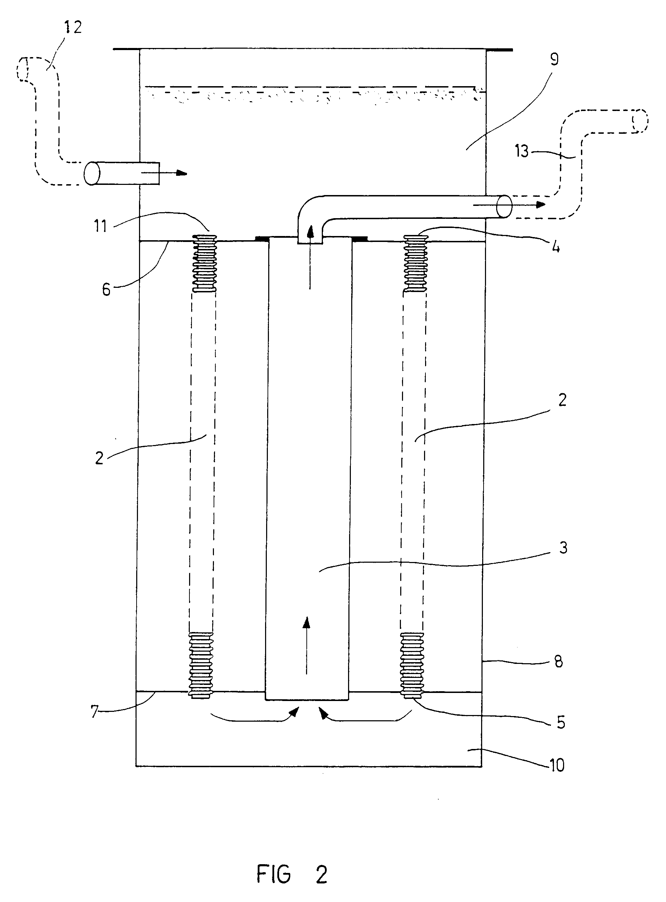

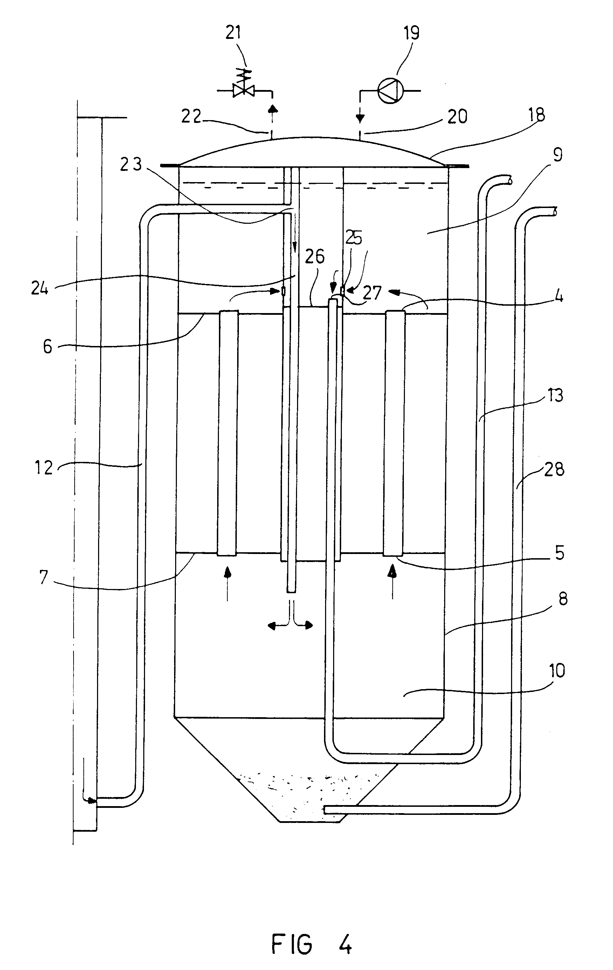

As shown in figs. 2-4 the battery 1 is mounted in a vessel 8 so that the end covers 6, 7 seal watertight to the inside of the wall of the vessel 8. As illustrated, the battery 1 is located in the vessel 8 so that the space above the battery 1 contains a reservoir 9 and below the battery another space 10, which as shown in fig. 4 can be embodied as a reservoir.

Water resistance in the pipes 2 is so adjusted to the pressure head above the arrangement so that all the pipe openings 11 are covered with a water table. This ensures an even distribution of the water to all pipes 2.

Furthermore, the water volume flowing through the system, Q m$^3$/h, is apportioned to the total swept surface area, F m$^2$, by the pipes 2 in relation to the affinity to water of the impurities.

With a surface load of Q/F = 0.015 m/h the waste water can be stripped of mechanically and chemically emulgated oil.

With a surface load of Q/F = 15.0 m/h the waste water can be stripped of non-emulgated oil.

When stripping waste water of emulgated oil it is possible to separate out 90% of the oil, where the known oil separators can separate out only 30-40% at the most.

In the embodiment shown in fig. 2 of an arrangement according to the invention the raw waste water enters the reservoir 9 through a pipe 12. The water passes internally through the pipes 2 and at the bottom of reservoir 10 it enters the central pipe 3 in the middle of the vessel from whose top purified waste water is discharged through the outlet pipe 13.

The embodiment shown in fig. 2 is well suited as an oil separator.

The oil is separated as pearls rising obliquely against the counter-flow of the water and collects at the surface where it can be skimmed off or otherwise removed.

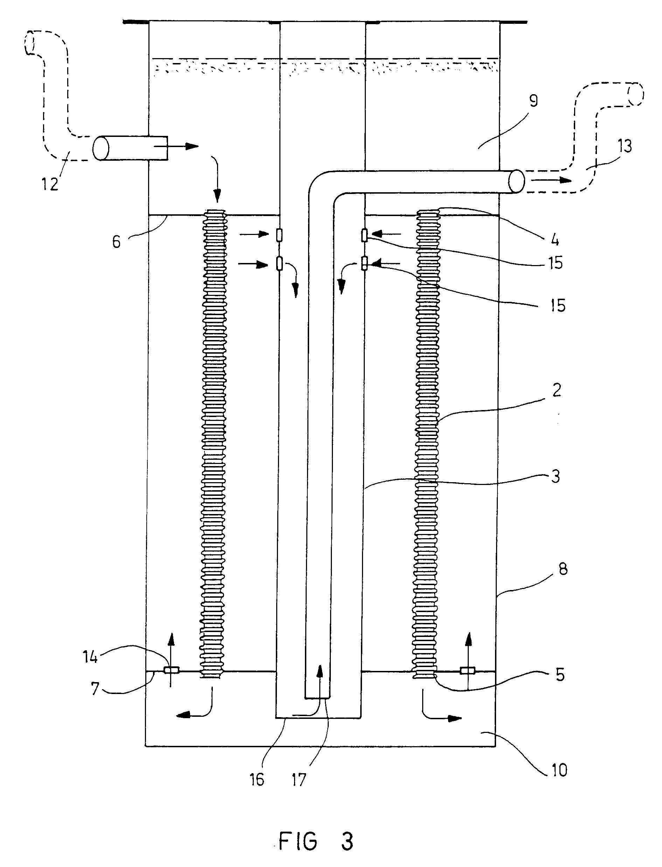

The embodiment shown in fig. 3 can also be used as an oil separator.

The central pipe 3 is carried right to the top of the reservoir 9 which is thus divided into an external annular zone and an internal zone in the pipe 3.

The water enters the external zone through a pipe 12. When the arrangement is in operation the reservoir 9 is almost full up with water. The water passes internally through the pipes 2 to a bottom reservoir 10, from which it continues through openings 14 in the bottom end cover 7.

From this point the water passes up through the battery 1 on the external side of pipes 2 and through openings 15 at the top into the central pipe 3 which has a blind bottom 16. The water is passed downwards towards the bottom 16 and from there out through the pipe 13 which leaves the system. The pipe inlet 17 is located a little above the bottom 16. In combination with the central pipe 3 the pipe 13 function as a water trap.

In the embodiment shown in fig. 3 there is an primary separation of oil internally in the pipes 2, and this oil collects on the surface of the water in the external annular zone of the reservoir 9, and a secondary separation of oil on the external side of the pipes 2. This secondary oil is transported in through the openings 15 and separated out on the water surface in the internal zone in the pipe 3.

In the embodiment according to the invention shown in figs. 2 and 3 the flow of water through the arrangement is continuous.

In the embodiment according to the invention shown in fig. 4 the flow of water through the arrangement is intermittent.

The arrangement can be designed according to the N-pump principle as described in the applicant's patent application HEP-A-0410923.

The upper reservoir 9 is closed with a cover 18 at the top. The reservoir can be put under pressure by means of a blower 19, which is connected to the reservoir by a pipe 20 which opens under the cover 18, and it can be ventilated by means of a venting valve 21, e.g. a magnetic valve, which is connected to the reservoir through a pipe 22, ending under the cover 18.

When the system is vented, water will be sent - e.g. from a sludge treatment plant - through a feeder pipe 12, which by means of a T-branch 23 is connected to the initial pipe 24 mounted inside the central pipe 3 and extending a distance down into the reservoir 10. The water is then forced up through the pipes 2 in the battery 1 and taken through openings 25 over an intermediate bottom 26 to the upper pipe opening 27 of the pipe 13.

When the system is put under pressure by the closing of the valve 21 and the starting of the blower 19, water will be forced from the reservoir 9 down through the pipes 2 in the battery 1. This water will loosen sludge deposited on the inside of the pipes 2. The loosened sludge will be transported with the water flow and settle on the bottom of the reservoir 10, where it can be removed through discharge pipe 28.

## Claims

1. Arrangement for purification of waste water comprising a number of lengths of pipe (2) wound helically, layer upon layer, round a central pipe (3) in the middle, **characterized** by the fact that the pipe ends (4,5) and the central pipe (3) seal watertight to two end covers (6,7), so that in combination they form a battery (1), which is mounted in an external vessel (8) so that the end covers (6, 7) form a watertight seal against the internal side wall of the vessel (8) and that the vessel (8) above and below the battery (1) includes a chamber or reservoir (9, 10) to one of which flows waste water and from the other of which is discharged purified water, that the water resistance in the pipes (2) is so apportioned to the pressure head above the arrangement that all pipe openings (11) are covered with a water table which ensures an even distribution of water to all the pipes (2), and that the volume of water flow, Q $m^3$/h, is apportioned to the total swept area, F $m^2$, of the pipes (2) depending on the affinity to water of the impurities.

2. Arrangement for purification of waste water according to claim 1, **characterized** by the pipes 2 being corrugated.

3. Arrangement for purification of waste water according to claim 1, **characterized** by the water flow through the arrangement being continuous.

4. Arrangement for purification of waste water according to claim 1, **characterized** by the water flow through the arrangement being intermittent.

5. Arrangement for purification of waste water according to claims 1-3, **characterized** by the fact that the water enters through the upper end of the pipes (2), and that the vessel (8) is embodied with an upper reservoir (9) above the pipe cover (6), which reservoir (9) can be open at the top or closed with a top cover so that the central pipe (3) in combination with the bottom end cover (7) form a water trap.

6. Arrangement for purification of waste water according to claims 1-3 and 5, **characterized** by the fact that the bottom end cover (7) is embodied with openings (14) and that the central pipe (3) at the top under the upper end cover (6) is embodied with openings (15) and at the bottom is closed with a cover (16) where a discharge pipe (13) for purified waste water is carried down the inside of the central pipe (3) so that the pipe inlet (17) is located a little above the bottom (16) of the central pipe.

7. Arrangement for purification of waste water according to claims 1-3, 5 and 6, **characterized** by the fact that the surface load Q/F ranges from 0.015 to 15.0 m/h.

8. Arrangement for purification of waste water according to claims 1 and 4, **characterized** by the fact that the vessel (8) is embodied with an upper (9) and a lower reservoir (10), that inside the central pipe (3) there is an initial pipe (24) to feed waste water to the reservoir (10) and another pipe (13) for discharge of purified waste water from the upper reservoir (10) to an upper pipe opening (27) of the pipe (13) through openings (25) in the central pipe (3), and a discharge pipe (28) is attached to the bottom of the lower reservoir (10) for transport of sludge.

**Patentansprüche**

1. Vorrichtung zur Abwasserklärung, welche eine Anzahl Rohrstücke (2) umfasst, die schichtweise und spiralig um ein Zentralrohr gewunden sind, dadurch **gekennzeichnet**, dass die Rohrenden (4,5) und das Zentralrohr (3) wasserdicht an zwei Endplatten (6.7) montiert sind, so dass sie zusammen eine Batterie (1) bilden, die in einem äusseren Behälter (8) so angebracht ist, dass die Endplatten (6,7) sich wasserdicht an die innere Seitenwand des Behälters anfügen, und dass im Behälter (8) über und unter der Batterie (1) eine Kammer oder ein Reservoir (9,10) ist, wobei dem einen das Abwasser zufliesst und dem anderen geklärtes Abwasser abläuft, dass der Wasserwiderstand in den Rohren (2) der Schubkraft über der Vorrichtung angepasst ist, dass alle Rohrmündungen (11) von einem Wasserspiegel gedeckt sind, wodurch eine gleichmässige Wasserverteilung an alle Rohre (2) erreicht wird, und dass die durchströmende Wassermenge, O m³/h, dem gesamten bestrichenen Oberflächenareal, F m², der Rohre (2), in Abhängigkeit von der Affinität der Unreinheiten mit Wasser, angepasst wird.

2. Vorrichtung zur Abwasserklärung dem Anspruch 1 entsprechend, dadurch **gekennzeichnet**, dass die Rohre (2) sich wellen.

3. Vorrichtung zur Abwasserklärung dem Anspruch 1 entsprechend, dadurch **gekennzeichnet**, dass der Wasserstrom durch die Vorrichtung kontinuierlich ist.

4. Vorrichtung zur Abwasserklärung dem Anspruch 1 entsprechend, dadurch **gekennzeichnet**, dass der Wasserstrom durch die Vorrichtung intermittent ist.

5. Vorrichtung zur Abwasserklärung dem Anspruch 1-3 entsprechend, dadurch **gekennzeichnet**, dass das Wasser den obersten Enden der Rohre (2) zugeleitet wird, und dass der Behälter (8) mit einem oberen Reservoir (9) über der Endplatte (6) ausgestattet ist, welches Reservoir (9) entweder oben offen oder mit einer Platte verschlossen sein kann, so dass das Zentralrohr (3) mit der untersten Endplatte (7) eine Wassersperre bildet.

6. Vorrichtung zur Abwasserklärung dem Anspruch 1-3 und 5 entsprechend, dadurch **gekennzeichnet**, dass die unterste Endplatte (7) mit Öffnungen (14) versehen ist, und dass das Zentralrohr (3) oben, unterhalb der obersten Endplatte (6), mit Öffnungen (15) versehen ist, und unten mit einer Platte (16) verschlossen wird, wobei ein Abflussrohr (13) für Abwasser durch das Zentralrohr (3) geführt ist, so dass sich die Rohrmündung (17) etwas oberhalb der Platte (16) des Zentralrohres befindet.

7. Vorrichtung zur Abwasserklärung dem Anspruch 1-3, 5 und 6 entsprechend, dadurch **gekennzeichnet**, dass sich die Oberflächenbelastung O/F im Gebiet 0,015 bis 15,0 m/h befindet.

8. Vorrichtung zur Abwasserklärung dem Anspruch 1 und 4 entsprechend, dadurch **gekennzeichnet**, dass der Behälter (8) mit einem oberen (9) und unteren Reservoir (10) ausgestattet ist, dass im Zentralrohr (3) ein Rohr (24) zwecks Zufuhr von Abwasser zum Reservoir (10) und ein anderes Rohr (13) zwecks Abfuhr von geklärtem Abwasser montiert ist, das von dem oberen Reservoir (9) zu einer oberen Rohrmündung (27) im Rohr (13) durch Öffnungen (25) im Zentralrohr (3) geleitet wird, wobei am Boden des unteren Reservoirs (10) ein Abflussrohr (28) montiert ist zwecks Transport von Klärschlamm.

**Revendications**

1. Dispositif pour l'épuration des eaux résiduaires, comportant un nombre de tuyaux (2) roulés en spirale - couche sur couche - autour du tuyau central (3), **caractérisé par le fait que** les extrémités (4, 5) des tuyaux et le tuyau central (3) sont raccordés - de manière à ne pas laisser passer l'eau - aux deux fonds d'extrémité (6, 7) de sorte qu'ils forment un ensemble (1) qui est monté dans un réservoir extérieur (8) de telle manière que les fonds (6, 7) s'adaptent de manière étanche à la paroi intérieure du réservoir (8) et qu'il y aura dans le réservoir (a) au-dessus et au-dessous de l'énsemble (1) un compartiment ou une cuve (9, 10) dont l'un reçoit les eaux résiduaires et l'autre les eaux épurées, que la résistance de l'eau dans les tuyaux (2) est ajustée à la pression motrice au passage du dispositif de telle manière que toutes les extrémités (11) des tuyaux sont couvertes d'un plan d'eau, ce qui permet d'avoir une répartition d'eau égale vers tous les tuyaux (2) et que la quantité d'eau de passage, Q m$^3$/h, est adaptée à la surface balayée totale, F m$^2$, des tuyaux (2) en fonction de l'affinité des impuretés vis-à-vis de l'eau.

2. Dispositif pour l'épuration des eaux résiduaires selon l'objet 1, **caractérisé par le fait que** les tuyaux (2) sont ondulés.

3. Dispositif pour l'épuration des eaux résiduaires selon l'objet 1, **caractérisé par le fait que** l'eau traverse le dispositif de manière continue.

4. Dispositif pour l'épuration des eaux résiduaires selon l'objet 1, **caractérisé par le fait que** l'eau traverse le dispositif de manière intermittente.

5. Dispositif pour l'épuration des eaux résiduaires selon les objets 1-3, **caractérisé par le fait que** l'eau arrive aux extrémités supérieures des tuyaux (2) et que le réservoir (8) comporte une cuve supérieure (9) au-dessus du fond (6), la cuve pouvant être ouverte en haut ou fermée par une plaque supérieure de sorte que le tuyau central (3) forme un siphon avec le fond inférieur (7).

6. Dispositif pour l'épuration des eaux résiduaires selon les objets 1-3 et 5, **caractérisé par le fait que** le fond du tuyau inférieur (7) possède des ouvertures (14) et que le tuyau central (3) possède en haut sous le fond supérieur (6) des ouvertures (15) et est fermée en bas par un fond (16); à ce propos, un tuyau de sortie (13) des eaux épurées est placé à l'intérieur du tuyau central (3) de sorte que l'extrémité (17) du tuyau est placée un peu au-dessus du fond (16) du tuyau central.

7. Dispositif pour l'épuration des eaux résiduaires selon les objets 1-3, 5 et 6, **caractérisé par le fait que** la charge en surface Q/F est située dans la gamme 0,015 à 15,0 m/h.

8. Dispositif pour l'épuration des eaux résiduaires selon les objets 1 et 4, **caractérisé par le fait que** le réservoir (8) possède une cuve supérieure (9) et inférieure (10), qu'il a été monté dans le tuyau central (3) un tuyau (24) pour l'admission des eaux résiduaires à la cuve (10) et un autre tuyau (13) pour l'évacuation des eaux épurées depuis la cuve supérieure (9) vers l'extrémité supérieure (27) du tuyau (13) au travers des ouvertures (25) du tuyau central (3); à ce propos, il a été monté un tuyau de sortie (28) au fond de la cuve inférieure (10) pour l'évacuation des boues.

FIG 1

FIG 2

FIG 3

FIG 4